# EUROPÄISCHE PATENTSCHRIFT

(11) **EP 2 310 333 B1**
(45) Veröffentlichungstag und Bekanntmachung des Hinweises auf die Patenterteilung: **09.05.2012**
(21) Anmeldenummer: 09781203.6
(22) Anmeldetag: 28.07.2009
(51) Int. Cl.: C04B 7/44, F27B 7/42

(54) **ZEMENTANLAGE SOWIE VERFAHREN ZUM BETREIBEN EINER ZEMENTANLAGE**
CEMENT SYSTEM AND METHOD FOR OPERATING A CEMENT SYSTEM
CIMENTERIE ET PROCÉDÉ DE FONCTIONNEMENT D'UNE CIMENTERIE

(30) Priorität: 04.08.2008 DE 102008036088
(43) Veröffentlichungstag der Anmeldung: 20.04.2011
(73) Patentinhaber: ThyssenKrupp Polysius AG, 59269 Beckum (DE)
(72) Erfinder: KUPPER, Detlev, 48291 Telgte (DE); SCHULZ, Dietmar, 59269 Beckum (DE)
(74) Vertreter: Tetzner, Michael
(86) Internationale Anmeldenummer: PCT/EP2009/059758
(87) Internationale Veröffentlichungsnummer: WO 2010/015551

(56) Entgegenhaltungen:
- WO-A2-2005/003665
- WO-A2-2006/016210
- DE-A1- 19 936 375
- DE-U1-202008 001 981
- US-A- 5 156 676
- US-B1- 6 383 283
- TWOMEY C ET AL: "THE IDENTITY OF THE SULFUR-CONTAINING PHASES PRESENT IN CEMENT CLINKER MANUFACTURED USING A HIGH SULFUR PETROLEUM COKE FUEL" JOURNAL OF CHEMICAL TECHNOLOGY AND BIOTECHNOLOGY, BLACKWELL SCIENTIFIC PUBLICATIONS. OXFORD, GB, Bd. 79, Nr. 5, 1. Mai 2004 (2004-05-01), Seiten 486-490, XP001236563 ISSN: 0268-2575
- MORTENSEN A H ET AL: "Umstellung von zwei Ofenlinien auf die 100% Befeuerung mit hochschwefelhaltigem Petrolkoks - Massnahmen zur Realisierung eines kostenbesparenden Konzepts, Teil 1 [Converting two kiln lines to 100% high sulphur petroleum coke firing - procedures for implementing a cost-saving scheme, Part 1]" ZKG INTERNATIONAL, BAUVERLAG BV., G]TERSLOH, DE, Bd. 51, Nr. 2, 1. Januar 1998 (1998-01-01) , Seiten 84-87,90, XP008115346 ISSN: 0949-0205
- LENE J-C: "High sulfur fuels - Fired for action!" WORLD CEMENT, PALLADIAN PUBLICATIONS, ELSTEAD, GB, Bd. 32, Nr. 12, 1. Dezember 2001 (2001-12-01), Seiten 28-32, XP008115244 ISSN: 0263-6050

## Beschreibung

Die Erfindung betrifft eine Zementanlage sowie ein Verfahren zum Betreiben einer Zementanlage.

Bei der Zementklinkerherstellung wird das Rohmaterial zunächst vorgewärmt, anschließend vorcalciniert und schließlich in einem Ofen gebrannt. Der eigentliche Brennprozess findet dabei in der Sinterzone des Ofens statt, in der das Material auf Temperaturen von 1400 bis 1500°C erhitzt wird.

Die DE 698 06 182 T betrifft ein Verfahren zur Herstellung von Zementklinker mittels schwefelreichem Brennstoff, wobei die Sauerstoffkonzentration am Einlass des Brennofens auf 4,5 bis 5,5% erhöht wird, wodurch sich die Temperatur, bei der sich das Kalziumsulfat zersetzt, auf eine Temperatur größer als die Sintertemperatur erhöht, sodass CaSO₄ ein Bestandteil des Endprodukts wird, anstatt sich in Gase zu zersetzen und Ablagerungen im Bennofen, dem Vorwärmofen und den Vorwärmzyklonen zurückzulassen.

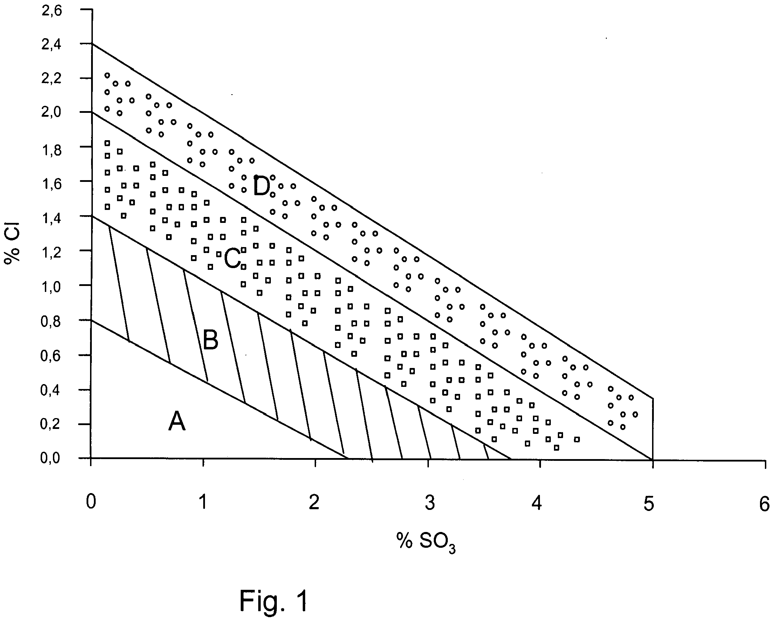

Bestimmte Komponenten, insbesondere Alkalimetalle in Kombination mit Chlor und Schwefel, verflüchtigen sich in der Sinterzone des Ofens und werden mit dem Ofenabgas ausgetragen (Flüchtigkeit). Das Ofenabgas wird zur Wärmebehandlung des Materials in der Calcinierzone und der Vorwärmzone verwendet. Während dieses Wärmeaustausches kondensieren die flüchtigen Bestandteile auf dem Rohmaterial (Adsorption) und werden wieder in die Sinterzone eingebracht. Dort verflüchtigen sie sich zum Teil wieder, sodass sich auf diese Weise ein Kreislauf dieser Komponenten bildet. Alles was nicht mit dem Zementklinker oder dem Abgas aus dem System ausgetragen wird, verbleibt somit in diesem Kreislauf, wobei sehr hohe Konzentrationen der im Kreislauf geführten Komponenten erreicht werden können. Alle Kreisläufe können dabei zu unerwünschter Ansatzbildung in der Calcinierzone und der Vorwärmzone und dabei zu Betriebsstörungen führen. Die Ursache besteht darin, dass bestimmte Mischungen der Kreislaufkomponenten zu Eutektika führen, die bei vergleichsweise niedrigen Temperaturen schmelzen. Wenn das Rohmaterial schmilzt und an den Anlagenwänden auskristallisiert, bilden sich Ansätze. Besonders Problematisch ist in diesem Zusammenhang der in den Kreislauf über das Rohmaterial und den Brennstoff eingebrachte Schwefel. Die maximale erlaubte SO₃-Konzentration im Brenngut beträgt daher bisher 5%. Bei höheren Konzentrationen besteht Verstopfungsgefahr und die Anlage kann nicht mehr betrieben werden. Ist zudem noch Chlor vorhanden, sinkt die tolerierbare Menge an SO₃ weiter ab. In der Darstellung gemäß Fig.1 ist die Wechselwirkung von SO₃ und Cl auf Ansatz im Einlauf des Drehrohrofens dargestellt. Dabei sind im Bereich A keine Ansätze feststellbar, während im Bereich B eine normale Reinigung und im Bereich C eine intensive Reinigung erforderlich ist. Im Bereich D und bei einer SO₃-Konzentration von mehr als 5% besteht Verstopfungsgefahr.

Man ist daher bisher bestrebt, Kreisläufe bzw. Flüchtigkeiten zu unterdrücken. Um die Kreislaufkonzentration zu reduzieren ist es bekannt, einen Bypass vorzusehen, der einen Teil der Ofenabgase ausschleust. Damit werden Kreislaufkomponenten aus dem Kreislauf entfernt und die Kreisläufe werden entlastet. Dadurch werden die Kreislaufkonzentrationen reduziert und Ansatzbildungen vermindert, wodurch die Anlagenverfügbarkeit verbessert wird.

Es gibt nun aber Brennstoffe, die eine relativ hohe Schwefelkonzentration aufweisen und daher bei der Zementherstellung bisher nicht eingesetzt werden konnten. Zwar wird in der EP-A2-1 428 804 ein Zementklinker angegeben, der mit Brennstoff hergestellt werden soll, der eine Schwefelkonzentration von mehr als 5% aufweist, jedoch wird in der Patentschrift nicht näher angegeben, wie dieser Zementklinker hergestellt werden kann, ohne dass es dabei zu Ansatzbildungen im Vorwärmer bzw. Calcinator bzw. zu erhöhten SO₂-Emissionen kommt.

Der Erfindung liegt daher die Aufgabe zugrunde, ein Verfahren bzw. eine Vorrichtung zum Betreiben einer Zementanlage anzugeben, wobei Brennstoff mit einem hohen Schwefelgehalt verwendet werden kann, ohne dabei die SO₂-Emissionen zu erhöhen und außerdem eine ausreichende Betriebssicherheit zu gewährleisten.

Erfindungsgemäß wird diese Aufgabe durch die Merkmale der Ansprüche 1 und 13 gelöst.

Beim erfindungsgemäßen Verfahren zum Betreiben einer Zementanlage wird das Rohmehl in einer Vorwärmzone vorgewärmt, das vorgewärmte Material in einer Calcinierzone vorcalciniert und das vorcalcinierte Material schließlich in einer Sinterzone gesintert. Die Zementanlage wird dabei so betrieben, dass das der Sinterzone zugeführte vorcalcinierte Material eine SO₃-Konzentration von mindestens 5,5 Massenprozent und einen CaSO₄-Anteil von mindestens 75 Massen-%, vorzugsweise 90%, des gesamten Salzgehaltes des vorcalcinierten Materials aufweist.

Die erfindungsgemäße Zementanlage weist eine Vorwärmzone zum Vorwärmen des Rohmaterials, eine Calcinierzone zur Vorcalcinierung des vorgewärmten Materials und eine Sinterzone zur Sinterung des vorcalcinierten Materials auf Weiterhin ist eine Steuer- und Regelvorrichtung zum Betreiben der Zementanlage gemäß dem obigen Verfahren vorgesehen.

Die Erfindung beruht auf der Erkenntnis, dass die Ansatzbildung nicht nur von der Schwefelkonzentration, sondern auch von der Salzzusammensetzung und insbesondere vom CaSO₄-Anteil abhängt. Bei einem entsprechend hohen CaSO₄-Anteil kann daher die SO₃-Konzentration deutlich über das bisher tolerierbare Maß angehoben werden. Bei einem CaSO₄-Anteil von 90 Massen-% des gesamten Salzgehaltes kann die SO₃-Konzentration bis über 10 Massen-% gesteigert werden.

Bei den der Erfindung zugrundeliegenden Versuchen hat sich gezeigt, dass durch die Betriebsweise der Anlage die Vorgänge "Adsorption" und "Flüchtigkeit", welche die Schwefelkonzentration im Kreislauf bestimmten, gezielt beeinflusst werden können.

Weitere Vorteile und Ausgestaltungen der Erfindung sind Gegenstand der Unteransprüche.

Gemäß einer bevorzugten Ausgestaltung der Erfindung werden zumindest einzelne der folgenden Betriebsparametermessungen durchgeführt und zur Steuerung der Zementanlage verwendet:
a. Gasanalyse im Einlaufbereich der Sinterzone, der Calcinierzone und/oder vor dem Beginn der Vorwärmzone,
b. Temperaturmessung von Material und/oder Gas in der Sinterzone,
c. Temperaturmessung von Material und/oder Gas in der Calcinierzone,
d. Temperaturmessung von Material und/oder Gas in der Vorwärmzone,
e. Laboranalysen des vorcalcinierten Materials, des Rohmaterials oder des Brennstoffs,
f. Laboranalysen des in der Sinterzone gebrannten Zementklinkers,
g. Thermische oder thermografische Analyse im Bereich der Sinterzone.

Weiterhin kann die SO₃-Konzentration und der CaSO₄-Anteil im vorcalcinierten Material durch ein oder mehrere der folgenden Maßnahmen beeinflusst werden:
a. Auswahl der Rohmaterialien,
b. Auswahl des in der Sinterzone verwendeten Brennstoffs,
c. Einstellung des Momentums eines in der Sinterzone betriebenen Brenners,
d. Einstellung des Verhältnisses von Verbrennungsluft und Brennstoff in der Sinterzone,
e. Einstellung des Verhältnisses von Brennstoffmenge und Rohmehlmenge an mindestens einer Brennstoffzufuhrstelle der Anlage,
f. Einstellung des Vorcalcinierungsgrades des Rohmehls nach der Calcinierzone,
g. Einstellung der Rohmehlfeinheit.

Weiterhin wird die Zementanlage zweckmäßigerweise so betrieben, dass die Schwefelflüchtigkeit in der Sinterzone mindestens 60%, vorzugsweise wenigstens 80% und die Schwefeladsorption im Vorwärmerbereich, in der Calcinierzone und/oder in der Sinterzone mindestens 80%, vorzugsweise mindestens 90% beträgt. Weiterhin soll das den Vorwärmer verlassende Abgas einen SO₂-Gehalt von weniger als 600 mg/Nm³ bei 10% O₂, vorzugsweise weniger als 300 mg/Nm³ bei 10% O₂, aufweisen. Dies wird über die Erhöhung der Adsorption im Zusammenhang mit der eingestellten Flüchtigkeit erreicht.

Weitere Vorteile und Ausgestaltungen der Erfindung werden im Folgenden anhand der Beschreibung und der Zeichnung näher erläutert.

In der Zeichnung zeigen
Fig. 1 eine Darstellung der Wechselwirkung von SO₃ und Cl auf Ansatz im Einlauf des Drehrohrofens und
Fig. 2 Zeichnung zeigt eine schematische Darstellung einer Zementanlage.

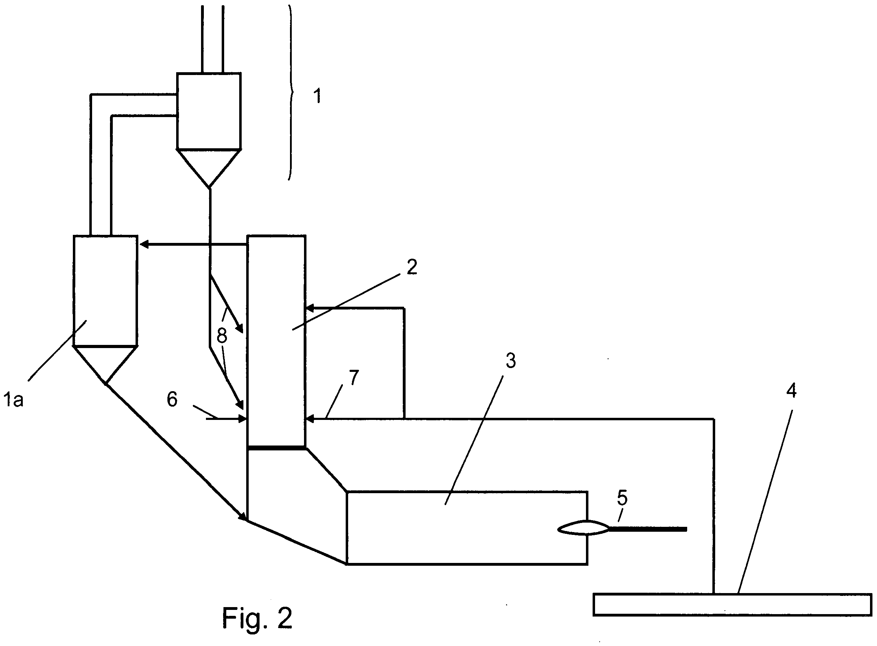

Die Zementanlage gemäß Fig. 2 besteht im Wesentlichen aus einer, beispielsweise durch einen mehrstufigen Schwebegaswärmetauscher gebildeten Vorwärmzone 1, einer Calcinierzone 2 und einer als Drehrohrofen ausgebildeten Sinterzone 3 sowie einer nachgeschalteten Kühlzone 4, die beispielsweise als Schubrostkühler gebildet wird. Die Abgase der Sinterzone 3 durchströmen nacheinander die Calcinierzone 2 und die Vorwärmzone 1, das Rohmehl wird in an sich bekannter Art und Weise im Gegenstrom zu den Abgasen der Vorwärmzone 1 und anschließend der Calcinierzone 2 zugegeben, bevor das vorcalcinierte Material in der Sinterzone 3 gebrannt wird. Die Sinterzone weist wenigstens eine Brenner 5 mit verstellbarem Momentum auf.

Die Sinterzone 3 wird mit einem Brenner mit verstellbarem Momentum betrieben, sodass durch Einstellung des Momentums die Flammenform, -größe und/oder - temperatur eingestellt werden kann.

Die Calcinierzone 2 wird im dargestellten Ausführungsbeispiel durch eine Steigleitung gebildet, die über einen Krümmer an den untersten Zyklon 1a der Vorwärmzone angeschlossen ist. Im unteren Bereich der Calcinierzone 2 sind wenigstens eine Brennstoffzufuhrstelle 6 und Mittel 7 zum Zuführen von Verbrennungsluft, beispielsweise Tertiärluft der Kühlzone 4, vorgesehen. Weiterhin mündet wenigstens eine Rohmehlleitung 8 der Vorwärmzone 1 in der Calcinierzone 2. Brennstoff, Verbrennungsluft und Rohmehl können an ein oder mehreren übereinander angeordneten Stellen in die Calcinierzone eingeführt werden. Auf diese Weise können in der Calcinierzone unterschiedliche Verbrennungszonen ausgebildet werden.

Weiterhin umfasst die Anlage geeignete Mittel, um zumindest einzelne der nachfolgend aufgeführten Betriebsparametermessungen durchführen zu können:
a. Gasanalyse im Einlaufbereich der Sinterzone, der Calcinierzone und/oder vor dem Beginn der Vorwärmzone, wobei über die Zusammensetzung der Gasatmosphäre die Adsorptionsbedingungen eingestellt werden können: Mehr Sauerstoff heißt mehr Adsorption und damit einen höheren SO₃-Gehalt im vorcalcinierten Material und weniger SO₂ im Abluftkamin.
b. Temperaturmessung von Material und/oder Gas in der Sinterzone, wobei über die Temperaturen der Sinterzone die Bedingungen für die Schwefelverflüchtigung in der Sinterzone geändert und damit die Kreisläufe und entsprechend die SO₃-Konzentrationen im Klinker und im vorcalcinierten Material beeinflusst werden können,
c. Temperaturmessung von Material und/oder Gas in der Calcinierzone, um sicherzustellen, dass eine ausreichende Temperatur zum Calcinieren bzw. für eine Adsorption gewährleistet ist,
d. Temperaturmessung von Material und/oder Gas in der Vorwärmzone, um die generelle Kontrolle der Anlage zu unterstützen,
e. Laboranalysen des vorcalcinierten Materials, des Rohmaterials oder des Brennstoffs,
f. Laboranalysen des in der Sinterzone gebrannten Zementklinkers,
g. Thermische oder thermografische Analyse im Bereich der Sinterzone.

Die Zementanlage wird so betrieben, dass das der Sinterzone zugeführte vorcalcinierte Material eine SO₃-Konzentration von mindestens 5,5 Massen-% und einen CaSO₄-Anteil von mindestens 75 Massen-%, vorzugsweise mindestens 90% des gesamten Salzgehaltes aufweist. Die SO₃-Konzentration und der CaSO₄-Anteil im vorcalcinierten Material können dabei durch folgende Maßnahmen beeinflusst werden:
a. Auswahl der Rohmaterialien,
b. Auswahl des in der Sinterzone verwendeten Brennstoffs,
c. Einstellung des Momentums des in der Sinterzone betriebenen Brenner 5,
d. Einstellung des Verhältnisses von Verbrennungsluft und Brennstoff in der Sinterzone,
e. Einstellung des Verhältnisses von Brennstoffmenge und Rohmehlmenge an mindestens einer Brennstoffzufuhrstelle der Anlage,
f. Einstellung des Vorcalcinierungsgrades des Rohmehls nach der Calcinierzone,
g. Einstellung der Rohmehlfeinheit.

Selbst bei vorgegebenen Rohmaterialien und vorgegebenem Brennstoff für die Sinterzone können die SO₃-Konzentration und der CaSO₄-Anteil noch entscheidend durch die Maßnahmen c bis f beeinflusst werden. Durch diese Maßnahmen kann insbesondere die Schwefelflüchtigkeit in der Sinterzone im Bereich der Sinterzone beeinflusst werden. Hierbei ist eine Schwefelflüchtigkeit von mindestens 60%, vorzugsweise von mehr als 80%, wünschenswert.

Ein weiterer sehr wichtiger Mechanismus für den Betrieb der Zementanlage ist die Schwefeladsorption in der Vorwärmzone 1, in der Calcinierzone 2 und/oder im Einlaufbereich der Sinterzone 3, wobei eine Adsorption von mindestens 80%, vorzugsweise mindestens 90% erreicht werden kann. Die Adsorption in der Calcinierzone beruht auf folgender Reaktion:

CaO + SO₂ + ½ O₂ → CaSO4

Für diese Reaktion muss in der Calcinierzone genügen CaO und vor allem O₂ zur Verfügung gestellt werden. Der Sauerstoff gelangt beispielsweise über die Luftzuführstelle 7 in die Calcinierzone. Bei der Verbrennungsluft handelt es sich üblicherweise um Tertiärluft aus der Kühlzone, die gegebenenfalls aber noch mit reinem Sauerstoff angereichert werden könnte.

Ebenfalls werden über die Fahrweise der Anlage in der Sinterzone und die Einstellung des Verhältnisses zwischen Verbrennungsluft und Brennstoffmenge die Sauerstoffkonzentration in der Calcinierzone sowie die Schwefelflüchtigkeit beeinflusst.

Bei einer solchen Zementanlage lässt sich in der Sinterzone und gegebenenfalls in der Calcinierzone ein Brennstoff mit einer Schwefelkonzentration von wenigstens 3,5 Massen-% einsetzen. Wird die Anlage so betrieben, dass das der Sinterzone zugeführte vorcalcinierte Material eine SO₃-Konzentration von mindestens 5,5 Massen-% und einen CaSO₄-Anteil von mindestens 75 Massen-% des gesamten Salzgehaltes aufweist, kann man erreichen, dass trotz des hohen Schwefeleintrags im System und der niedrigen Emissionen von Schwefeloxiden (das den Vorwärmer verlassene Abgas weist einen SO₂-Gehalt von weniger als 600 mg/Nm³ bei 10% O₂, vorzugsweise weniger als 300 mg/Nm³ bei 10% O₂, auf), die Betriebssicherheit der Anlage gewährleistet wird und Ansätze und Verstopfungen vermieden werden.

Der in der Sinterzone gebrannte Zementklinker weist dann eine SO₃-Konzentration von wenigstens 1 Massen-%, vorzugsweise mindestens 2 Massen-%, auf.

Weiterhin kann eine Vorrichtung zur Unterbrechung der Kreisläufe, beispielsweise eine Bypassvorrichtung, eingebaut werden, durch deren Betrieb und die Änderungen der abgeschiedenen Staub- und/oder Gasmengen können die Kreisläufe, insbesondere von Schwefel, Alkalien und/oder Chlor, beeinflusst und entsprechend eingestellt werden.

Zweckmäßigerweise können auch mehrere Luftstoßgeräte in bestimmten Bereichen des Vorwärmers und/oder Calcinators eingebaut werden, um die Reinigung in den Gefahrzonen zu verbessern und die Betriebssicherheit zu erhöhen.

Mit dem oben beschriebenen Verfahren kann die Zementanlage betriebssicher und mit geringer SO₂-Emission betrieben werden.

## Patentansprüche

1. Verfahren zum Betreiben einer Zementanlage mit Vorwärmung von Rohmehl in einer Vorwärmzone (1), Vorcalcinierung des vorgewärmten Materials in einer Calcinierzone (2) und Sinterung des vorcalcinierten Materials in einer Sinterzone (3),
**dadurch gekennzeichnet, dass** die Zementanlage so betrieben wird, dass das der Sinterzone zugeführte vorcalcinierte Material eine SO₃-Konzentration von mindestens 5,5 Massen-% und einen CaSO₄-Anteil von mindestens 75 Massen-% des gesamten Salzgehalts des vorcalcinierten Materials aufweist.

2. Verfahren nach Anspruch 1, **dadurch gekennzeichnet, dass** zumindest einzelne der folgenden Betriebsparametermessungen durchgeführt und zur Steuerung der Zementanlage verwendet werden:
a. Gasanalyse im Einlaufbereich der Sinterzone (3), der Calcinierzone (2) und/oder vor dem Beginn der Vorwärmzone (1),
b. Temperaturmessung von Material und/oder Gas in der Sinterzone (3),
c. Temperaturmessung von Material und/oder Gas in der Calcinierzone (2),
d. Temperaturmessung von Material und/oder Gas in der Vorwärmzone (1),
e. Laboranalysen des vorcalcinierten Materials, des Rohmaterials oder des Brennstoffs,
f. Laboranalysen des in der Sinterzone gebrannten Zementklinkers,
g. Thermische oder thermografische Analyse im Bereich der Sinterzone (3).

3. Verfahren nach Anspruch 1 oder 2, **dadurch gekennzeichnet, dass** die SO₃-Konzentration und der CaSO₄-Anteil im vorcalcinierten Material durch ein oder mehrere der folgenden Maßnahmen beeinflusst werden:
a. Auswahl der Rohmaterialien,
b. Auswahl des in der Sinterzone (3) verwendeten Brennstoffs,
c. Einstellung des Momentums eines in der Sinterzone (3) betriebenen Brenners (5),
d. Einstellung des Verhältnisses von Verbrennungsluft und Brennstoff in der Sinterzone (3),
e. Einstellung des Verhältnisses von Brennstoffmenge und Rohmehlmenge an mindestens einer Brennstoffzufuhrstelle der Anlage.
f. Einstellung des Vorcalcinierungsgrades des Rohmehls nach der Calcinierzone (2).
g. Einstellung der Rohmehlfeinheit.

4. Verfahren nach Anspruch 1, **dadurch gekennzeichnet, dass** in der Sinterzone (3) ein Brenner (5) mit verstellbarem Momentum eingesetzt wird und durch Einstellung des Momentums die Flammenform, -größe, und/oder -temperatur eingestellt wird.

5. Verfahren nach einem der vorherigen Ansprüche, **dadurch gekennzeichnet, dass** Zementanlage so betrieben wird, dass die Schwefelflüchtigkeit in der Sinterzone wenigstens 60%, vorzugsweise wenigstens 80% beträgt.

6. Verfahren nach Anspruch 1, **dadurch gekennzeichnet, dass** in der Calcinierzone genügend O₂ und CaO für die nachfolgende Reaktion bereitgestellt werden:
CaO + SO₂ + ½ O₂ → CaSO4

7. Verfahren nach einem der vorherigen Ansprüche, **dadurch gekennzeichnet, dass** Zementanlage so betrieben wird, dass die Schwefeladsorption in der Vorwärmzone (1), in der Calcinierzone (2) und/oder in der Sinterzone (3) mindestens 80%, vorzugsweise mindestens 90% beträgt.

8. Verfahren nach Anspruch 1, **dadurch gekennzeichnet, dass** die Zementanlage so betrieben wird, dass das den Vorwärmer (1) verlassende Abgase einen SO₂-Gehalt von weniger als 600 mg/Nm³ bei 10% O₂, vorzugsweise weniger als 300 mg/Nm³ bei 10% O₂, aufweist.

9. Verfahren nach einem der vorherigen Ansprüche, **dadurch gekennzeichnet, dass** eine Vorrichtung zur Unterbrechung der Kreisläufe, beispielsweise eine Bypassvorrichtung, betrieben wird, durch deren Betrieb und die Änderungen der abgeschiedenen Staub- und/oder Gasmengen die Kreisläufe, insbesondere von Schwefel, Alkalien und/oder Chlor, beeinflusst und entsprechend eingestellt werden können.

10. Verfahren nach Anspruch 9, **dadurch gekennzeichnet, dass** zur die Einstellung der Atmosphäre und der CO₂-Konzentration mindestens eine der Verbrennungsstellen der Anlage mit Sauerstoff angereicherter Verbrennungsluft oder ausschließlich mit Sauerstoff betrieben wird.

11. Verfahren nach Anspruch 1, **dadurch gekennzeichnet, dass** in der Sinter- und/oder in der Calcinierzone (2) ein Brennstoff mit einer Schwefelkonzentration von wenigstens 3,5 Massen-% eingesetzt wird.

12. Verfahren nach Anspruch 1, **dadurch gekennzeichnet, dass** der in der Sinterzone (3) gebrannte Zementklinker eine SO₃-Konzentration von wenigstens 1 Massen-%, vorzugsweise mindestens 2 Massen-%, aufweist.

13. Zementanlage mit einer in einer Vorwärmzone (1) zur Vorwärmung von Rohmehl, einer Calcinierzone (2) zur Vorcalcinierung des vorgewärmten Materials und einer Sinterzone (3) zur Sinterung des vorcalcinierten Materials,
**gekennzeichnet, durch** eine Steuer- und Regelvorrichtung zum Betreiben der Zementanlage gemäß dem Verfahren nach einem oder mehreren der vorhergehenden Ansprüche.

## Claims

1. Method for operating a cement plant with preheating of raw meal in a preheating zone (1), precalcining of the preheated material in a calcining zone (2) and sintering of the precalcined material in a sintering zone (3),
**characterised in that** the cement plant is operated in such a manner that the precalcined material which is supplied to the sintering zone has an SO₃ concentration of at least 5.5% by mass and a CaSO₄ proportion of at least 75% by mass of the total salt content of the precalcined material.

2. Method according to claim 1, **characterised in that** at least some of the following operating parameter measurements are carried out and used to control the cement plant:
a. gas analysis in the inlet region of the sintering zone (3), calcining zone (2) and/or before the beginning of the preheating zone (1),
b. temperature measurement of material and/or gas in the sintering zone (3),
c. temperature measurement of material and/or gas in the calcining zone (2),
d. temperature measurement of material and/or gas in the preheating zone (1),
e. laboratory analyses of the precalcined material, the raw material or the fuel,
f. laboratory analyses of the cement clinker burnt in the sintering zone,
g. thermal or thermographic analysis in the region of the sintering zone (3).

3. Method according to claim 1 or claim 2, **characterised in that** the SO₃ concentration and the CaSO₄ proportion in the precalcined material are influenced by one or more of the following steps:
a. selecting the raw materials,
b. selecting the fuel used in the sintering zone (3),
c. adjusting the momentum of a burner (5) operated in the sintering zone (3),
d. adjusting the relationship of the combustion air and fuel in the sintering zone (3),
e. adjusting the relationship of the fuel amount and raw meal amount at least at one fuel supply location of the plant,
f. adjusting the precalcining degree of the raw meal after the calcining zone (2),
g. adjusting the raw meal fineness.

4. Method according to claim 1, **characterised in that** a burner (5) having adjustable momentum is used in the sintering zone (3) and the shape, size and/or temperature of the flame is adjusted by adjusting the momentum.

5. Method according to any one of the preceding claims, **characterised in that** the cement plant is operated in such a manner that the sulphur volatility in the sintering zone is at least 60%, preferably at least 80%.

6. Method according to claim 1, **characterised in that** enough O₂ and CaO are provided in the calcining zone for the following reaction:
CaO + SO₂ + ½O₂ → CaSO₄.

7. Method according to any one of the preceding claims, **characterised in that** the cement plant is operated in such a manner that the sulphur adsorption in the preheating zone (1), in the calcining zone (2) and/or in the sintering zone (3) is at least 80%, preferably at least 90%.

8. Method according to claim 1, **characterised in that** the cement plant is operated in such a manner that the exhaust gas leaving the preheater (1) has an SO₂ content of less than 600 mg/Nm³ at 10% of O₂, preferably less than 300 mg/Nm³ at 10% of O₂.

9. Method according to any one of the preceding claims, **characterised in that** a device for interrupting the circuits, for example, a bypass device, is operated and the circuits, in particular of sulphur, alkalis and/or chlorine, can be influenced and adjusted accordingly by the operation thereof and the changes to the separated amounts of dust and/or gas.

10. Method according to claim 9, **characterised in that** at least one of the combustion locations of the plant is operated with combustion air enriched with oxygen or exclusively with oxygen in order to adjust the atmosphere and the CO₂ concentration.

11. Method according to claim 1, **characterised in that** a fuel having a sulphur concentration of at least 3.5% by mass is used in the sintering and/or calcining zone (2).

12. Method according to claim 1, **characterised in that** the cement clinker burnt in the sintering zone (3) has an SO₃ concentration of at least 1% by mass, preferably at least 2% by mass.

13. Cement plant having a preheating zone (1) for preheating raw meal, a calcining zone (2) for precalcining the preheated material and a sintering zone (3) for sintering the precalcined material,
**characterised by** a control and regulation device for operating the cement plant according to the method of one or more of the preceding claims.

## Revendications

1. Procédé de fonctionnement d'une installation de fabrication de ciment, avec préchauffage de la farine crue dans une zone de préchauffage (1), calcination préalable du matériau préchauffé, dans une zone de calcination (2) et frittage du matériau précalciné, dans une zone de frittage (3),
**caractérisé en ce que** l'installation de fabrication de ciment est exploitée de sorte que le matériau précalciné, conduit à la zone de frittage (3), présente une concentration de SO₃ d'au moins 5,5 % en masse et un taux de CaSO₄ d'au moins 75 % en masse par rapport à la teneur totale en sel du matériau précalciné.

2. Procédé selon la revendication 1, **caractérisé en ce que** les mesures de paramètres individuelles, suivantes sont exécutées et utilisées pour la commande de l'installation de fabrication de ciment :
a. analyse de gaz dans la région d'entrée de la zone de frittage (3), de la zone de calcination (2) et / ou en amont du commencement de la zone de préchauffage (1),
b. mesure de la température du matériau et / ou des gaz dans la zone de frittage (3),
c. mesure de la température du matériau et / ou des gaz dans la zone de calcination (2),
d. mesure de la température du matériau et / ou des gaz dans la zone de préchauffage (1),
e. analyses de laboratoire du matériau précalciné, du matériau brut ou du combustible,
f. analyses de laboratoire du clinker de ciment cuit dans la zone de frittage,
g. analyse thermique ou thermographique dans la région de la zone de frittage (3).

3. Procédé selon revendication 1 ou 2, **caractérisé en ce que** la concentration de SO₃ et le taux de CaSO₄ du matériau précalciné sont influencés par l'une ou plusieurs des opérations suivantes :
a. choix des matières brutes,
b. choix du combustible utilisé dans la zone de frittage (3),
c. réglage du régime d'un brûleur (5), mis en oeuvre dans la zone de frittage (3),
d. réglage du rapport air de combustion et combustible dans la zone de frittage (3),
e. réglage du rapport quantité de combustible et quantité de farine crue, à au moins un point d'alimentation en combustible de l'installation,
f. réglage du degré de précalcination de la farine crue, en aval de la zone de calcination (2),
g. réglage de la finesse de la farine crue.

4. Procédé selon la revendication 1, **caractérisé en ce qu'**un brûleur (5) à régime réglable est mis en oeuvre dans la zone de frittage (3) et que la forme, la grandeur de la flamme et / ou la température sont réglées en fonction du réglage du régime.

5. Procédé selon l'une des revendications précédentes, **caractérisé en ce que** l'installation de fabrication de ciment fonctionne de sorte que la volatilité du soufre soit d'au moins 60 %, de préférence d'au moins 80 %, dans la zone de frittage.

6. Procédé selon la revendication 1, **caractérisé en ce que**, dans la zone de calcination, O₂ et CaO sont mis à disposition en quantité suffisante pour la réaction suivante :
CaO + SO₂ + 1/2 O₂ -> CaSO₄.

7. Procédé selon l'une des revendications précédentes, **caractérisé en ce que** l'installation de fabrication de ciment fonctionne de sorte que l'absorption de souffre, dans la zone de préchauffage (1), dans la zone de calcination (2) et / ou dans la zone de frittage (3), soit d'au moins 80 %, de préférence d'au moins 90 %.

8. Procédé selon la revendication 1, **caractérisé en ce que** l'installation de fabrication de ciment fonctionne de sorte que les gaz, quittant la zone de préchauffage (1), présentent une teneur en SO₂ inférieure à 600 mg / Nm³ pour 10 % de O₂, de préférence inférieure à 300 mg / Nm³ pour 10 % de O₂.

9. Procédé selon l'une des revendications précédentes **caractérisé en ce que** l'on utilise un dispositif d'interruption des circuits, par exemple un dispositif by-pass, au moyen duquel et des modifications des quantités de poussières et de gaz éliminées les circuits, en particulier de soufre, d'alcali et / ou de chlore, sont influencés et réglés de manière appropriée.

10. Procédé selon la revendication 9, **caractérisé en ce que**, pour le réglage de l'atmosphère et de la concentration de CO₂, au moins l'un des postes de combustion de l'installation est exploité avec de l'air de combustion enrichi d'oxygène ou exclusivement avec de l'oxygène.

11. Procédé selon la revendication 1, **caractérisé en ce que**, dans la zone de frittage et / ou dans la zone de calcination (2), on utilise un combustible, dont la concentration de soufre est d'au moins 3,5 % en masse.

12. Procédé selon la revendication 1, **caractérisé en ce que** le clinker de ciment, cuit dans la zone de frittage (3), présente une concentration de SO₃ d'au moins 1 % en masse, de préférence d'au moins 2 % en masse.

13. Installation de fabrication de ciment, qui est dotée d'une zone de préchauffage (1) pour la chauffe préalable de la farine crue, d'une zone de calcination (2) pour la calcination préalable du matériau préchauffé, et d'une zone de frittage (3) pour le frittage du matériau précalciné,
**caractérisée par** un dispositif de commande et de réglage du fonctionnement de ladite installation de fabrication de ciment selon le procédé conforme à l'une ou plusieurs des revendications précédentes.
